(19) Europäisches Patentamt
European Patent Office
Office européen des brevets

(11) Veröffentlichungsnummer: **0 283 009 B1**

# (12) EUROPÄISCHE PATENTSCHRIFT

(45) Veröffentlichungstag der Patentschrift: **22.06.94**

(51) Int. Cl.[5]: **C09D 183/00**, C09D 163/00, C08L 63/00, //(C08L63/00,83:08)

(21) Anmeldenummer: **88104253.5**

(22) Anmeldetag: **17.03.88**

## (54) Der Bewitterung ausgesetzte Anstriche.

(30) Priorität: **19.03.87 DE 3709045**

(43) Veröffentlichungstag der Anmeldung:
**21.09.88 Patentblatt 88/38**

(45) Bekanntmachung des Hinweises auf die Patenterteilung:
**22.06.94 Patentblatt 94/25**

(84) Benannte Vertragsstaaten:
**BE CH DE FR GB IT LI**

(56) Entgegenhaltungen:
**DE-A- 2 166 262**
**US-A- 4 413 104**

(73) Patentinhaber: **WACKER-CHEMIE GMBH**
**Hanns-Seidel-Platz 4**
**D-81737 München(DE)**

(72) Erfinder: **Herzig, Christian, Dr. Dipl.-Chem.**
**Schröckenbauer 1**
**D-8221 Taching(DE)**
Erfinder: **Deubzer, Bernward, Dr. Dipl.-Chem.**
**Virchowstrasse 14**
**D-8263 Burghausen(DE)**
Erfinder: **Frey, Volker, Dr. Dipl.-Chem.**
**Jahnweg 5**
**D-8263 Burghausen(DE)**
Erfinder: **Esterbauer, Josef**
**Unterweitzberg Nr. 34**
**A-5122 Hochburg(AT)**

**EP 0 283 009 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

In der DE-A-21 66 262 ist ein Kondensationsprodukt aus Epoxydharz und Trialkoxysilan mit Aminoalkylenaminogruppen und die Verwendung einer Emulsion dieses Kondensationsprodukts zur wasserabweisenden Behandlung von Textilien beschrieben. Die Vernetzung von Epoxydharz bei Raumtemperatur mittels Siliciumverbindung mit über Kohlenstoff an Silicium gebundenem, basischem Stickstoff, an den mindestens 1 Wasserstoffatom direkt gebunden ist, ist bereits bekannt. Hierzu wird z. B. auf US-A 4,413,104, Beispiel 1, Absatz 2, verwiesen. Es wurde nun gefunden, daß der Bewitterung ausgesetzte Anstriche aus derartig vernetztem Epoxydharz besonders kreidungsarm sind.

Gegenstand der Erfindung ist daher die Verwendung von Epoxydharz und Siliciumverbindung mit über Kohlenstoff an Silicum gebundenem, basischem Stickstoff, an den mindestens 1 Wasserstoffatom direkt gebunden ist, als wesentliche Bestandteile von der Bewitterung ausgesetzte Überzüge ergebenden Anstrichmitteln.

Die erfindungsgemäß verwendeten Anstrichmittel können beliebige Epoxydharze enthalten, die als wesentliche Bestandteile von Anstrichmitteln geeignet sind. Derartige Epoxydharze sind bereits bekannt. Z. B. aus Kirk-Othmer, Encyclopedia of Chemical Technology, 3. Auflage, Band 9, Seiten 267 bis 290.

Sie brauchen daher hier nicht näher beschrieben zu werden. Besonders bevorzugt enthalten die erfindungsgemäß verwendeten Anstrichmittel als mindestens einen Teil vom Epoxydharz mindestens ein Umsetzungsprodukt aus 2,2-Bis-(4-hydroxyphenyl)-propan (Bisphenol A) und
Epichlorhydrin, also der Verbindung der Formel

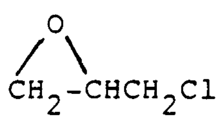

Weitere Beispiele für bevorzugte Epoxydharze in den erfindungsgemäß verwendeten Anstrichmitteln sind Triglycidylisocyanurat sowie Umsetzungsprodukte aus Bis-(4-hydroxyphenyl)-methan (Bisphenol F) und Epichlorhydrin.

Die Epoxydharze können durch Umsetzung mit Organosiliciumverbindungen, wie dem Silan der Formel

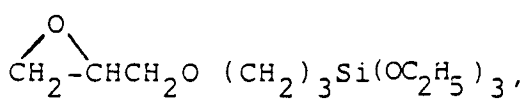

modifiziert sein.

Vorzugsweise sind die Siliciumverbindungen mit über Kohlenstoff an Silicium gebundenem, basischem Stickstoff, an den mindestens 1 Wasserstoffatom direkt gebunden ist, Organopolysiloxane aus Einheiten der Formel

$$Y_aR_bSi(OR^1)_cO_{\frac{4-a-b-c}{2}} ,$$

worin R gleiche oder verschiedene einwertige Kohlenwasserstoffreste mit 1 bis 8 Kohlenstoffatom(en) je Rest, $R^1$ gleiche oder verschiedene Alkylgruppen mit 1 bis 4 Kohlenstoffatom(en) je Rest und Y gleiche oder verschiedene, einwertige SiC-gebundene organische Reste mit basischem Stickstoff, an den mindestens 1 Wasserstoffatom direkt gebunden ist, bedeuten und a 0 oder 1, durchschnittlich 0,02 bis 1,0, b 0,1,2 oder 3, durchschnittlich 0,0 bis 2,0 und c 0,1,2 oder 3, durchschnittlich 0,0 bis 2,0 ist.

Die Siliciumverbindungen mit über Kohlenstoff an Silicium gebundenem, basischem Stickstoff, an den mindestens 1 Wasserstoffatom direkt gebunden ist, können aber auch z.B. Silane der Formel

$YR_dSi(OR^1)_{3-d}$ ,

worin Y, R und $R^1$ jeweils die oben dafür angegebene Bedeutung haben, und d 0,1 oder 2 ist, Silcarbane

der Formel

$Y(OR^1)_2Si(CH)_2Si(OR^1)_2Y$ ,

worin Y and $R^1$ jeweils die oben dafür angegebene Bedeutung haben, oder Umsetzungsprodukte von mindestens einer Verbindung aus mindestens einer der drei vorstehend angegebenen Klassen von Siliciumverbindungen mit über Kohlenstoff an Silicium gebundenem basischem Stickstoff, an den mindestens 1 Wasserstoffatom direkt gebunden ist, und Kohlenwasserstoffdiolen mit 2 bis 15 Kohlenstoffatomen je Molekül, wie Diethylenglykol, Bisphenol A oder Bisphenol F, Kohlenwasserstofftriolen, wie Glycerin, oder alkoholische Hydroxylgruppen aufweisenden rein-organischen Polymerisaten, wie Hydroxypolyestern, Hydroxypolyethern, Hydroxypolyacrylaten oder Hydroxypolyurethanen, sein.

Vorzugsweise enthalten die vorstehend genannten Umsetzungsprodukte durchschnittlich mindestens 1 Siliciumatom mit über Kohlenstoff daran gebundenem, basischem Stickstoff, an den mindestens 1 Wasserstoffatom direkt gebunden ist, je 3000 g Umsetzungsprodukt, insbesondere je 1500 g Umsetzungsprodukt.

Beispiele für Kohlenwasserstoffreste R sind der Methyl-, Ethyl-, n-Propyl-, Isopropyl- und 2-Ethylhexylrest,sowie Butylreste; aus Kohlenstoff- und Wasserstoffatomen aufgebaute Reste mit aliphatischer Mehrfachbindung, wie der Vinyl- und Allylrest; cycloaliphatische Kohlenwasserstoffreste, wie der Cyclopentylrest und Cyclohexylrest, sowie Methylcyclohexylreste; aromatische Kohlenwasserstoffreste, wie der Phenylrest und Xenylreste; Alkarylreste, wie Tolylreste; und Aralkylreste, wie der Benzylrest. Vorzugsweise sind die Kohlenwasserstoffreste R insbesondere wenn sie an Siliciumatome, an die auch über Kohlenstoff basischer Stickstoff mit direkt daran gebundenem Wasserstoff gebunden ist, gebunden sind, jedoch frei von aliphatischen Mehrfachbindungen. Schon wegen der leichteren Zugänglichkeit ist weiterhin bevorzugt, daß mindestens 50 % der Anzahl der Reste R Methylreste sind.

Die oben genannten Beispiele für Alkylreste R mit 1 bis 4 Kohlenstoffatom(en) je Rest gelten im vollen Umfang auch für die Reste $R^1$.

Vorzugsweise sind die Reste Y solche der Formel

$R^2NHR^3$- ,

worin $R^2$ Wasserstoff oder gleiche oder verschiedene Alkyl-oder Cycloalkyl- oder Aminoalkylreste mit 1 bis 8 Kohlenstoffatomen je Rest und $R^3$ gleiche oder verschiedene geradkettige oder verzweigte von aliphatischen Mehrfachbindungen freie Kohlenwasserstoffreste mit einem Kohlenstoffatom oder 3 oder 4 Kohlenstoffatomen je Rest, insbesondere den Rest der Formel

$-(CH_2)_3-$

bedeutet.

Die Beispiele für Alkyl- und Cycloalkylreste R gelten im vollen Umfang auch für Alkyl- bzw. Cycloalkylreste $R^2$.

Beispiele für Aminoalkylreste $R^2$ sind solche der Formel

$H_2N(CH_2)_3-$
$H_2N(CH_2)_2NH(CH_2)_2-$
$H_2N(CH_2)_2-$
$(H_3C)_2NH(CH_2)_2-$
$H_2N(CH_2)_4-$
$H(NHCH_2CH_2)_3-$ und
$C_4H_9NH(CH_2)_2NH(CH_2)_2-$ .

Besonders bevorzugt ist a 0,1 bis 0,4, b 0,5 bis 1,5 und c 0,1 bis 1,0.

Die erfindungsgemäß verwendeten Anstrichmittel können eine Art von Siliciumverbindung mit über Kohlenstoff an Silicium gebundenem, basischem Stickstoff,an den mindestens 1 Wasserstoffatom direkt gebunden ist, oder ein Gemisch aus mindestens zwei verschiedenen Arten derartiger Siliciumverbindungen enthalten.

Vorzugsweise enthalten die erfindungsgemäß verwendeten Anstrichmittel Siliciumverbindung mit über Kohlenstoff an Silicium gebundenem basischem Stickstoff, an den mindestens 1 Wasserstoffatom direkt gebunden ist, in Mengen von 5 bis 70 Gewichtsprozent, insbesondere 25 bis 40 Gewichtsprozent, jeweils bezogen auf des Gesamtgewicht aller anderen Harze als solchen mit Kohlenstoff an Silicium gebundenem,

basischem Stickstoff, an den mindestens 1 Wasserstoffatom gebunden ist.

Weiterhin ist bevorzugt, daß 0,8 bis 1,5, insbesondere 1,0 bis 1,3 direkt an Stickstoff gebundene Wasserstoffatome je Epoxygruppe vorliegen.

Zusätzlich zu Epoxydharz und Siliciumverbindung mit über Kohlenstoff an Silicium gebundenem, basischem Stickstoff, an den mindestens 1 Wasserstoffatom direkt gebunden ist, können die erfindungsgemäß verwendeten Anstrichmittel in Anstrichmitteln auf Grundlage von Epoxydharz herkömmliche Bestandteile enthalten. Beispiele für solche Bestandteile sind handelsübliche Vernetzer für Epoxydharze, wie Amino- oder Aminoamidverbindungen, die von Siliciumatomen frei sind, z.B. Melaminharze Lösungsmittel, z.B. Methylethylketon, Methylisobutylketon, Ethylenglykol oder Xylolisomerengemische oder Gemische aus mindestens zwei derartiger Lösungsmittel, Pigmente, wie Titandioxyd, Verlaufshilfsstoffe und Streckmittel.

Bei den erfindungsgemäß verwendeten Anstrichmitteln werden vor ihrer endgültigen Verwendung Epoxydharz getrennt von Verbindung mit basischem Stickstoff,an den mindestens 1 Wasserstoffatom direkt gebunden ist, aufbewahrt. Bei der endgültigen Verwendung werden Epoxydharz und Verbindung mit basischem Stickstoff, an den mindestens 1 Wasserstoffatom direkt gebunden ist, miteinander vermischt und die so erhaltene Mischung wird auf die anzustreichende Unterlage aufgetragen. Dieses Auftragen kann in beliebiger für das Auftragen von flüssigen Anstrichmitteln auf die anzustreichenden Unterlagen geeigneter Weise erfolgen, beispielsweise durch Streichen, Walzen, Sprühen oder Bürsten. Nach dem Vermischen dieser beiden Komponenten, wobei Mischungen erhalten werden, die niedriger viskos sind als solche, die Aminoamide als Vernetzungsmittel enthalten, insbesondere aber nach dem Auftragen der dabei erhaltenen Mischungen auf die anzustreichenden Unterlagen, erfolgt die Vernetzung der Zusammensetzungen bei Raumtemperatur innerhalb weniger Tage. Die Vernetzung kann durch Erwärmen auf Temperaturen von 40° bis 110°C beschleunigt werden. Die erfindungsgemäß verwendeten Anstrichmittel vernetzen rascher als solche, die Epoxydharze und als Vernetzungsmittel Aminoamide anstelle von Siliciumverbindungen mit über Kohlenstoff an Silicium gebundenem Stickstoff, an den mindestens 1 Wasserstoffatom direkt gebunden ist, enthalten.

Die erfindungsgemäß bereitgestellten der Bewitterung ausgesetzten Anstriche sind nicht nur, wie bereits eingangs bemerkt, besonders kreidungsarm, was bedeutet, daß sich auf ihrer Oberfläche unter dem Einfluß von Licht und atmosphärischen Einflüssen besonders wenig und/oder besonders langsam ein abwischbarer Belag bildet, der durch Abwittern von vernetztem Epoxydharz verursacht wurde, sondern auch besonders hart und chemikalienbeständig.

Bei den anzustreichenden Unterlagen kann es sich um beliebige Gegenstände handeln, die vor den Einflüssen der Bewitterung geschützt oder aus anderen Gründen mit einem Anstrich versehen werden sollen, der gegenüber Bewitterung beständig ist. Hierzu gehören z.B. Fassaden, Dächer oder Umzäunungen aus Holz, Metallen, wie Stahl, Aluminium oder Kupfer, oder Beton, Flächen aus Beton oder Asphalt, die mit einem der Bewitterung widerstehenden Anstrich wie Fahrbahnmarkierungen, versehen werden sollen, die Außenseiten von Land-, Luft- oder Wasserfahrzeugen und Bohrinseln.

In den folgenden Beispielen beziehen sich alle Angaben von Teilen und Prozentsätzen auf das Gewicht, soweit nichts anderes angegeben ist.

Beispiel

a) 368 Teile einer 75 %igen Lösung eines 3 % Si-gebundene Hydroxylgruppen enthaltenden Organopolysiloxans mit einem mit einem Verhältnis von SiC-gebundenen organischen Resten zu Siliciumatomen von 1,46:1,wobei 37 % der Anzahl dieser Reste Phenylreste sind, während die übrigen SiC-gebundenen organischen Reste Methylreste sind, in einem handelsüblichen Xylolisomeren-Gemisch wird mit 180 Teilen beta-Aminoethyl-gamma-aminopropyl-trimethoxysilan in 32 Teilen des handelsüblichen Xylolisomeren-Gemisches vermischt. Die so erhaltene Mischung wird 3 Stunden auf 110° C erwärmt. Anschließend werden bei 150° C und 1 hPa (abs.) die unter diesen Bedingungen siedenden Bestandteile des Reaktionsgemisches abdestilliert. Der Rückstand wird mit soviel handelsüblichem Xylolisomeren-Gemisch vermischt, daß eine 75 %ige Lösung erhalten wird. Diese Lösung ist eine schwach gelbliche Flüssigkeit mit einer Viskosität von etwa 50 $mm^2.s^{-1}$ bei 250° C. Das in dieser Lösung enthaltene Organopolysiloxan hat die Formel

$$[H_2N(CH_2)_2NH(CH_2)_3]_{a'}(CH_3)_{b'}(C_6H_5)_{b''}Si(OCH_3)_{c'}O_{\frac{4-a'-b'-b''-c'}{2}}$$

worin
a′ durchschnittlich 0,22
b′ durchschnittlich 0,71
b″ durchschnittlich 0,42
c′ durchschnittlich 0,55
ist.
b) Ein Gemisch aus
48,5 Teilen handelsüblichem Umsetzungsprodukt aus 2,2-Bis-(4-hydroxyphenyl)-propan und Epichlorhydrin mit einem Molekulargewicht von etwa 900
15,0 Teilen Methylethylketon
15,0 Teilen Methylisobutylketon
7,0 Teilen Ethylenglykolmonoethylether
30,0 Teilen handelüblichem Xylolisomeren-Gemisch
4,5 Teilen einer 10 %igen handelsüblichen Lösung eines Melaminharzes in Xylolisomeren-Gemisch
72,3 Teilen Titandioxyd
wird mit 31,1 Teilen der Organopolysiloxan-Lösung, deren Herstellung oben unter a) beschrieben wurde, vermischt.
c)
1. Viskositätsanstieg einer Probe des Anstrichmittels, dessen Herstellung vorstehend unter b) beschrieben wurde, bei 25° C:

| Zeit nach Bereitung der Mischung, Stunden: | 2 | 6 | 24 | 48 |
|---|---|---|---|---|
| Auslaufzeit aus DIN 4-Becher, Sekunden | 15,8 | 16,6 | 28,2 | geliert |

2. Eine weitere Probe des Anstrichmittels wird eine Stunde nach seiner Bereitung auf Stahlblech aufgetragen, wobei der so erhaltene Übertrag mehr oder weniger unmittelbar nach dem Auftragen eine Dicke von 100 Mikrometer hat. Das so mit Anstrichmittel versehene Stahlblech wird bei 25° C aufbewahrt.

| Zeit nach dem Auftragen, Tage: | 1 | 2 | 3 | 4 |
|---|---|---|---|---|
| Doppelriebe +) | 22 | 59 | 170 | mehr als 200 |
| Bleistifthärte | 2H | 4H | 6H | 7H |

+) mit einem mit Methylethylketon (MEK) getränkten Lappen, die zur Entfernung des Anstrichs erforderlich sind.

3. Die vorstehend unter 2. beschriebene Arbeitsweise wird wiederholt mit der Abänderung, daß das mit Anstrichmittel versehene Stahlblech nicht bei 25° C, sondern bei 60° C aufbewahrt wird.

| Zeit nach dem Auftragen, Stunden: | 1 | 2 | 3 | 5 |
|---|---|---|---|---|
| Doppelriebe +) | 22 | 65 | 140 | mehr als 200 |
| Bleistifthärte | 6H | 8H | 8H | 8H |

+) mit einem mit Methylethylketon (MEK) getränkten Lappen, die zur Entfernung des Anstrichs erforderlich sind.

Mechanische Eigenschaften des nach 2. hergestellten Films nach 5 Stunden bei 60° C, Schlagzähigkeit: 437 g.m Tiefung (nach Erichsen), DIN 53156/Mai 1971: 6,5 mm Dornbiegeversuch DIN

53152/Mai 1971: 2 mm

d) Stahlbleche, die mit einem Anstrich gemäß c) 3. versehen wurden, werden abwechselnd je 8 Stunden mittels einer Quecksilber-Ultraviolettlicht-Lampe mit einem Ultraviolettlicht-Bereich von 280 bis 360 Nanometer belichtet und je 4 Stunden wird auf ihnen Wasserdampf kondensieren gelassen.

| Glanzwerte nach Schnellbewitterung, Stunden: | | | | |
|---|---|---|---|---|
| | 0 | 24 | 72 | 165 |
| Reflexionsgrad: | 83 | 76 | 69 | 7 |

Kreidung nach 500 Stunden Belichtung mit der Quecksilber-Ultraviolettlicht-Lampe:0 - 1. (Je geringer der Wert, desto weniger Kreidung).

Vergleichsversuch (I)

a) Ein Gemisch aus
48,5 Teilen handelsüblichem Epoxydharz
10,0 Teilen Methylethylketon
10,0 Teilen Methylisobutylketon
5,0 Teilen Ethylenglykolmonoethylether
22,0 Teilen handelsüblichem Xylolisomeren-Gemisch
4,5 Teilen der 10 %igen handelsüblichen Lösung eines Melaminharzes in Xylolisomeren-Gemisch
51,5 Teilen Titandioxyd
wird mit 2,4 Teilen Diethylentriamin in 5,0 Teilen handelsüblichem Xylolisomeren-Gemisch vermischt. Die so erhaltene Mischung hat das gleiche Verhältnis von Pigment zu Polymeren, den gleichen Gehalt an anderen Stoffen als Lösungsmittel und das gleiche Verhältnis von Epoxy- zu NH-Gruppen wie die Mischung, deren Herstellung in Beispiel 1 unter b) beschrieben wurde.

b) Die in Beispiel 1 unter c) 2. und 3. angegebenen Arbeitsweisen werden wiederholt mit der Abänderung, daß die Mischung, deren Herstellung vorstehend unter a) beschrieben wurde, anstelle der Mischung, deren Herstellung in Beispiel 1 unter b) beschrieben wurde, verwendet wird.

| Zeit bei 25° C nach dem Auftragen, Tage: | 2 | 3 | 7 |
|---|---|---|---|
| Doppelriebe +) | 6 | 11 | 40 |
| Bleistifthärte | HB | F | H |

+) mit einem mit MEK getränkten Lappen, die zur Entferung des Anstrichs erforderlich sind

| Zeit bei 60° C nach dem Auftragen,Stunden: | 1 | 2 | 3 | 5 |
|---|---|---|---|---|
| Doppelriebe +) | 15 | 50 | 95 | 200 |
| Bleistifthärte | 6H | 8H | 8H | 8H |

+) mit einem mit MEK getränkten Lappen, die zur Entfernung des Anstrichs erforderlich sind

Vergleichsversuch II

a) Die bei Vergleichsversuch (I) unter a) beschriebene Arbeitsweise wird wiederholt mit den Abänderungen, daß 75,7 Teile Titandioxyd anstelle von 51,5 Teilen Titandioxyd und 26,7 Teile eines handelsüblichen Amin -amidvernetzers in 20 Teilen handelsüblichem Xylolisomeren-Gemisch anstelle von 2,4 Teilen

Diethylentriamin in 5,0 Teilen Xylolisomeren-Gemisch verwendet werden. Die so erhaltene Mischung hat das gleiche Verhältnis von Pigment zu Polymeren und den gleichen Gehalt an anderen Stoffen als Lösungsmittel wie die Mischung, deren Herstellung in Beispiel 1 unter b) beschrieben wurde.

b) 1. Viskositätsanstieg einer Probe des Anstrichmittels, dessen Herstellung vorstehend unter a) beschrieben wurde, bei 25° C:

| Zeit nach Bereitung der Mischung, Stunden | | | | | |
|---|---|---|---|---|---|
| | 1 | 6 | 21 | 45 | 53 |
| ++) | 39,0 | 48,5 | 100,0 | 765,8 | geliert |

++) Auslaufzeit aus DIN 4-Becher, Sekunden

c) Die in Beispiel 1 unter c) 3. angegebene Arbeitsweise wird wiederholt mit der Abänderung, daß die Mischung, deren Herstellung vorstehend unter a) beschrieben wurde, anstelle der Mischung, deren Herstellung in Beispiel 1 unter b) beschrieben wurde, verwendet wird.

| Zeit nach dem Auftragen, Stunden: | 1 | 4 | 5 | 7 | 8 |
|---|---|---|---|---|---|
| Doppelriebe +) | 7 | 80 | 150 | 185 | mehr als 200 |

+) mit einem mit MEK getränkten Lappen, die zur Entfernung des Anstrichs erforderlich sind

Mechanische Eigenschaften des nach c) hergestellten Films nach 8 Stunden bei 60° C:
Schlagzähigkeit: 276 g.m
Dornbiegeversuch, DIN 53152/Mai 1971: 3 mm

Die in Beispiel 1 unter d) angegebenen Prüfungsmaßnahmen werden wiederholt mit der Abänderung, daß Stahlbleche, die mit einem Anstrich, wie vorstehend unter c) angegeben, versehen wurden, anstelle der in Beispiel 1 verwendeten, mit einem Anstrich versehenen Stahlbleche verwendet werden.

| Glanzwerte bei Schnellbewitterung, Stunden: | | | | |
|---|---|---|---|---|
| | 0 | 24 | 72 | 165 |
| Reflexionsgrad | 93 | 83 | 33 | 3 |

Kreidung nach 500 Stunden Belichtung mit der Quecksilber-Ultraviolettlicht-Lampe:5 (5 ist der schlechtest mögliche Wert).

**Patentansprüche**

1. Verwendung von Epoxydharz und Siliciumverbindung mit über Kohlenstoff an Silicium gebundenem, basischem Stickstoff, an den mindestens 1 Wasserstoffatom direkt gebunden ist, als wesentliche Bestandteile von der Bewitterung ausgesetzte Überzüge ergebenden Anstrichmitteln.

2. Verwendung nach Anspruch 1, **dadurch gekennzeichnet,** daß die Anstrichmittel als mindestens einen Teil vom Epoxydharz mindestens ein Umsetzungsprodukt aus 2,2-Bis-(4-hydroxyphenyl)-propan und Epichlorhydrin enthalten.

3. Verwendung nach Anspruch 1 oder 2, **dadurch gekennzeichnet,** daß die Siliciumverbindungen mit über Kohlenstoff an Silicium gebundenem, basischem Stickstoff Organopolysiloxane aus Einheiten der Formel

$$Y_aR_bSi(OR^1)_cO_{\frac{4-a-b-c}{2}} ,$$

worin R gleiche oder verschiedene, einwertige Kohlenwasserstoffreste mit 1 bis 8 Kohlenstoffatom(en) je Rest, $R^1$ gleiche oder verschiedene Alkylgruppen mit 1 bis 4 Kohlenstoffatom(en) je Rest und Y gleiche oder verschiedene, einwertige SiC-gebundene organische Reste mit basischem Stickstoff bedeuten und a 0 oder 1, durchschnittlich 0,02 bis 1,0, b 0, 1, 2 oder 3, durchschnittlich 0,0 bis 2,0, und c 0, 1, 2 oder 3, durchschnittlich 0,0 bis 2,0, ist.

## Claims

1. Use of epoxy resin and silicon compound containing basic nitrogen bonded to silicon via carbon and to which at least 1 hydrogen atom is bonded directly as essential constituents of coating compositions which give rise to coatings exposed to weathering.

2. Use according to Claim 1, characterized in that the paints contain as at least one part of the epoxy resin at least one product of the reaction of 2,2-bis-(4-hydroxyphenyl)-propane with epichlorohydrin.

3. Use according to Claim 1 or 2, characterized in that the silicon compounds containing basic nitrogen which is attached to the silicon via a carbon, are organopolysiloxanes consisting of units of the formula

$$Y_aR_bSi(OR^1)_cO_{\frac{4-a-b-c}{2}} ,$$

wherein R denotes the same or different monovalent hydrocarbon radicals of 1 to 8 carbon atom(s) per radical, $R^1$ denotes the same or different alkyl groups of 1 to 4 carbon atom(s) per radical, Y denotes the same or different monovalent SiC-attached organic radicals containing basic nitrogen, and a is 0 or 1, on average 0.02 to 1.0, b is 0, 1, 2 or 3, on average 0.0 to 2.0, and c is 0, 1, 2 or 3, on average 0.0 to 2.0.

## Revendications

1. Emploi de résines époxydes et de composés de silicium comportant de l'azote basique lié par du carbone au silicium et auquel est directement lié au moins un atome d'hydrogène, comme constituants essentiels de produits de revêtements et peintures donnant des revêtements pouvant être exposés aux intempéries.

2. Emploi selon la revendication 1, caractérisé en ce que la peinture comprend, comme une partie au moins de la résine époxyde, au moins un produit de réaction du 2,2-bis-(4-hydroxyphényl)-propane et d'épichlorhydrine.

3. Emploi selon la revendication 1 ou 2, caractérisé en ce que les composés de silicium avec de l'azote basique lié par du carbone au silicium sont des organopolysiloxanes formés de motifs de formule

$$Y_aR_bSi(OR^1)_cO_{\frac{4-a-b-c}{2}} ,$$

dans laquelle R représente des radicaux hydrocarbonés monovalents identiques ou différents ayant chacun de 1 a 8 atomes de carbone, $R^1$ des alkyles identiques ou différents ayant chacun de 1 à 4 atomes de carbone et Y un radical organique monovalent en liaison SiC avec de l'azote basique, a est le nombre 0 ou 1, en moyenne de 0,02 à 1,0, b le nombre 0, 1, 2 ou 3, en moyenne de 0,0 a 2,0, et c le nombre 0, 1, 2 ou 3, en moyenne de 0,0 a 2,0.